# EUROPEAN PATENT APPLICATION

(11) **EP 3 269 256 A1**
(43) Date of publication of application: **17.01.2018**
(21) Application number: 16764269.3
(22) Date of filing: 14.03.2016
(51) Int. Cl.: A23L 19/12

(54) **METHOD FOR PREPARING A PACKAGED POTATO MILLEFEUILLE, AND POTATO MILLEFEUILLE PRODUCED**

(30) Priority: 13.03.2015 ES 201530325
(71) Applicant: Tinars SL, 17240 Llagostera (Girona) (ES)
(72) Inventor: GASCONS DÍAZ, Marc, 17240 Llagostera, Girona (ES)
(74) Representative: Juncosa Miro, Jaime
(86) International application number: PCT/ES2016/000037
(87) International publication number: WO 2016/146861

(57) **Abstract**

The invention relates to a method for preparing a packaged potato millefeuille and potato millefeuille produced, the method comprising cutting potatoes into slices that are between 1 and 2 mm thick, stacking said slices in alternate superimposed layers in a mold (20) with side walls (22, 23) having an inner height measuring between 2 and 3 cm, thermally treating the millefeuille and then cooling and packaging same. The method also includes a preserving step that includes vacuum-packaging the mold (20) with the potato millefeuille in a plastic film packaging (25) before thermal treatment, and subjecting said vacuum-packaged millefeuille to said thermal treatment which causes the pasteurization thereof.

## Description

### Technical Field

The present invention relates to a method for preparing a treated, pre-prepared, packaged potato millefeuille, suitable for being preserved and placed on the market in a refrigerated or frozen state, and prepared to be cooked subsequently in different ways and according to different cooking techniques for consumption. The present invention also relates to treated, pre-prepared and packaged potato millefeuilles prepared according to the method of the invention, including elongated slender portions or cubes of potato millefeuille or scalloped potato. The potato used may be ecologically cultivated.

In the present specification, the term "pre-prepared" covers both partially and completely cooking the packaged potato millefeuille, such that a consumer may or may not have to perform a subsequent cooking step (simple heating) which, in any case will last for a short time period, in order to be able to consume the product after taking it out of the packaging.

### Background of the Invention

Patent document ES 8303891 A1 discloses a method for treating vegetables, and particularly potatoes, in view of their presentation for sale, which comprises subjecting previously peeled and cut potatoes to mild pasteurization at a temperature comprised between 75°C and 85°C, then vacuum-packaging the potato slices in bags of plastic material, subsequently applying thermal treatment to the vacuum-packaged potato slices at a temperature comprised between 25°C and 35°C to favor the development of bacterial spores existing in the potatoes so that the bacteria acquire vegetative state, then subjecting the vacuum-packaged potato slices to pasteurization at a temperature comprised between 85°C and 90°C to kill said bacteria which have developed, and finally cooling the vacuum-sealed packaging containing the pasteurized potato slices.

One drawback of the said patent document ES 8303891 A1 is that the method is time-consuming and complex due to the thermal treatment for developing bacterial spores and to the double pasteurization, before and after the thermal treatment. Furthermore, the potato slices are cut without a well-defined configuration and are vacuum-packaged without any seasoning which will provide a marinade throughout the preservation time and favor subsequent cooking of the product once taken out of the packaging.

On the other hand, recipes for cooking a potato millefeuille are widely known and recognized, but the preparation thereof is laborious and requires using specific kitchen utensils which are not always within the reach of a home user, so there is a need to place on the market a potato millefeuille that is pre-prepared and packaged, particularly in elongated slender portions, or scalloped potatoes, ready to be finally cooked in different ways and according to different cooking techniques, preventing the user from having to perform prior laborious preparation steps.

Among said recipes, mention can be made to the preparation method of 'Pork Belly & Potato "Mille-Feuille" Recipe' found on the webpage 'Follow Me Foodie', http://www.followmefoodie.com/2012/12/pork-belly-potato-mille-feuille-recipe/.

### Disclosure of the Invention

According to a first aspect, the present invention contributes to satisfying the previous need by providing a method for preparing a treated, pre-prepared and packaged potato millefeuille.

The method of the present invention comprises, according to the conventional technique, cutting the previously peeled potatoes into slender potato slices. Said slender potato slices are then arranged stacked inside a container until a specific overall thickness is reached, and said slender potato slices stacked inside the container are subsequently subjected to a thermal treatment, after which it is cooled in its entirety.

Particularly, said container is a mold having a square or rectangular base with side walls having an inner height comprised between 2 and 3 cm.

According to the proposed method, said slender potato slices, are elongated and will be cut with a uniform thickness comprised between 1 and 2 mm, and will be seasoned and stacked inside the mold. The elongated slender potato slices will preferably be stacked inside said mold until the mold is filled up.

Advantageously, the elongated slender potato slices are seasoned with olive oil and fine salt or other condiments before stacking.

Said thermal treatment comprises steaming in an oven at a temperature between 80°C to 110°C for a time comprised between 25 min and 65 min. This cooking allows the potato slices to reach a partial or complete cooking state (such that the product obtained may or may not require a subsequent cooking step or that said cooking step is relatively brief). It must be pointed out that the duration of this thermal treatment step has been defined for said mold with a height between 2 and 3 cm and that for a mold with larger dimensions a longer duration would be required.

This thermal treatment is preferably performed by means of a steam oven of a type that is in itself well-known.

Alternatively, the thermal treatment could be performed in an autoclave, i.e., a vessel with controlled pressure and thermal treatment with steam.

After the thermal treatment has ended, cooling is performed until the product reaches a temperature comprised between 2°C and 8°C. This step preferably has a duration comprised between 2 to 24 hours so that the potato starch works as a binder between the potato slices and therefore they do not separate from one another.

The proposed method further includes applying a preserving step for preserving said potato millefeuille such that it allows the preservation thereof for a pre-established time period, as a pasteurized product.

After said preserving step the product will be cooked and presented inside a packaging suitable for storage, distribution and sale.

This method allows the obtention of a pre-prepared potato millefeuille, and particularly scalloped potatoes or portions thereof, said product being treated for its preservation and packaging for placement on the market, such that the subsequent use thereof only requires taking the product out of its packaging and completing the cooking thereof by means of a subsequent thermal treatment, generally for a short period of time, which allows serving dishes containing potato millefeuille prepared in a short period of time.

Likewise, characteristically according to the proposed method, said preserving step of said potato millefeuille is performed before the thermal treatment step and comprises vacuum-packaging, in a plastic film packaging, said mold containing said potato millefeuille, providing the subsequent thermal treatment of the vacuum-packaged millefeuille at a temperature of 99°C for 35 minutes causing its pasteurization, which ensures its preservation. After the cited cooling step, the product must be kept at a temperature between 2°C and 8°C, being able to be placed on the market in said packaging as a refrigerated product with a shelf-life of about 20 to 30 days, for example kept in an industrial, commercial or domestic refrigerator at a temperature no higher than 6°C.

It has been envisaged that once the millefeuille has been cooled and left to stand at said temperature between 2°C and 8°C, for a time comprised between 20 and 30 hours, the plastic film packaging is opened and the pre-prepared potato millefeuille is removed from the mold, cutting it into portions, advantageously elongated slender portions and/or cubes (or other shapes with a defined contour), and subsequently proceeding to its packaging and freezing at a temperature of -15°C or lower, (or proceeding to its freezing and packaging and keeping it frozen at -15°C) such that the pre-prepared, frozen potato millefeuille can be kept at this temperature for a few months until the moment of use, and can be placed on the market as a frozen product.

In all the cases, the cooling advantageously comprises forcefully cooling said pre-prepared potato millefeuille arranged in a mold in a blast chiller (or liquid nitrogen), for example.

It is contemplated that the cutting of the potato slices is to be performed, for example, by means of a continuous rotary cutting mandoline, particularly a mandoline known as Japanese mandoline, that provides a continuous elongated slender potato slice having a longer length than that of the potato. In such case, said elongated slender potato slice will have to be cut into strips of the same size as the mold, or to be folded in superimposed layers.

The proposed method can also comprise filling the mold with the seasoned elongated slender potato slices by arranging alternate superimposed layers of elongated slender potato slices until a potato millefeuille is formed, with the particularity of arranging, in each layer, adjacent elongated slender potato slices oriented with their longitudinal directions parallel to one another, and such that the longitudinal directions of the potato slices of one layer are crossed with respect to the longitudinal directions of the potato slices of another contiguous layer. In other words, the potato slices of the different layers cross over one another.

The method likewise envisages the possibility of arranging, between at least two of the alternate superimposed layers of potato slices, some slices, shreds or shavings of one or more food products selected from a group comprising cured ham, cooked ham, cold meats, fish, seafood, cheese, boiled egg, pâté, vegetables, fresh herbs and spices, whereby pre-prepared, packaged potato millefeuilles with different flavors are obtained. A carbohydrate, such as for example, rice starch or potato starch mixed with water, soy or a flavored liquid, or a gelling agent or a food-grade gum is used to carry out the adhesion of the slices, shreds or shavings of the one or more food products to the alternate superimposed layers of slender potato slices. The addition in a small proportion of a liquid or a flavored liquid solution (for example with rosemary, soy) or flavoring agent has additionally been envisaged.

The mold used in the method is, for example, made of a material selected from food-grade rigid plastic, semi-rigid plastic, plastic coated paper and plastic coated cardboard that are preferably disposable like the plastic film packaging.

According to a second aspect, the present invention provides a pre-prepared and packaged potato millefeuille, result of the method described above, particularly in the form of slender portions or cubes.

Particularly and in the case in which stacking of the slices is performed by crossing the different slices in different layers, the invention provides slender potato portions, or scalloped potato with a length of up to 18 cm, packaged either for preservation in a refrigerator (i.e., for a few days) or frozen.

### Brief Description of the Drawings

The foregoing and other features and advantages will be better understood based on the following detailed description of several possible embodiments, merely illustrative and nonlimiting, in reference to the attached drawings, in which:
Figure 1 is a schematic perspective view illustrating an operation of cutting a potato by means of a Japanese mandoline for obtaining elongated slender potato slices used in a method for preparing a pre-prepared and packaged potato millefeuille according to a first aspect of the embodiment of the present invention;
Figure 2 is a schematic perspective view of a mold used in the method of the present invention;
Figure 3 is a schematic perspective view illustrating an operation of filling the mold of Figure 2 with the slender potato slices of Figure 1;
Figure 4 is a schematic perspective view illustrating the mold with a potato millefeuille formed by elongated slender potato slices; showing a tool for cutting the molded product into strips;
Figure 5 is a schematic perspective view of a pre-prepared and packaged potato millefeuille according to a second aspect of the present invention, produced by means of vacuum-packaging, pasteurizing and cooling the potato millefeuille arranged in the mold of Figure 4; and
Figure 6 is a front view of a plurality of scalloped potatoes having a slender configuration according to an embodiment of the present invention.

### Detailed Description of an Embodiment

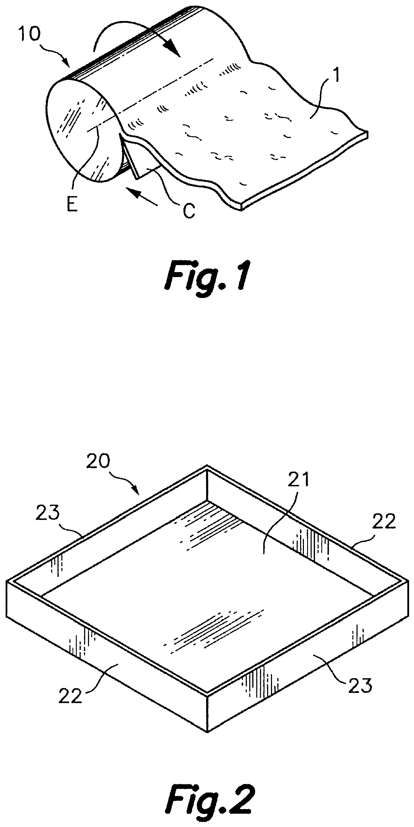

Figures 1 to 5 illustrate different consecutive steps of a method for preparing a pre-prepared and packaged potato millefeuille according to one aspect of the present invention, as well as a pre-prepared and packaged potato millefeuille according to a second aspect of the present invention.

Figure 1 shows the first step of the proposed method which comprises cutting previously peeled potatoes 10 into elongated slender potato slices 1 having a thickness comprised between 1 and 2 mm.

The operation of cutting the potatoes is performed by means of a Japanese mandoline or a continuous rotary cutting mandoline, the operation of which is schematically illustrated in Figure 1. The Japanese mandoline includes a lathe which causes the potato 10 to rotate around an axis of rotation E, a blade C provided with a cutting edge parallel to the axis of rotation E, and a device for gradually moving the blade C towards the potato 10 as the potato rotates around the axis of rotation E, whereby elongated slender potato slices 1 with a length that may reach up to 40 cm, depending on the initial size of the potato, are obtained.

Next, as shown in Figure 2, a mold 20 is prepared preferably made of a material selected from food-grade rigid plastic, semi-rigid plastic, plastic coated paper and plastic coated cardboard, provided with a square or rectangular base 21 having predetermined inner dimensions, for example, 18 x 18 cm, and side walls 22, 23 having an inner height comprised between 2 and 3 cm. Optionally, the inner surfaces of the base 21 and the side walls 22, 23 of the mold 20 can be covered with a polyethylene film for culinary use (not shown).

If required, the elongated slender potato slices 1 are cut to a length according to the predetermined inner dimensions of the base 21 of the mold 20, for example, at 18 cm. If the base is rectangular and has two different dimensions, for example 15 x 20 cm, half of the elongated slender potato slices 1 will be cut to the first of the two dimensions, for example at 15 cm, and the other half will be cut to the second of the two dimensions, for example at 20 cm.

The elongated slender potato slices 1 are seasoned with olive oil and fine salt preferably once they are cut according to the dimensions of the mold, although alternatively, they could be seasoned beforehand. Obviously, the seasoning can include other ingredients, such as aromatic herbs, (soy), pepper and/or other spices, etc.

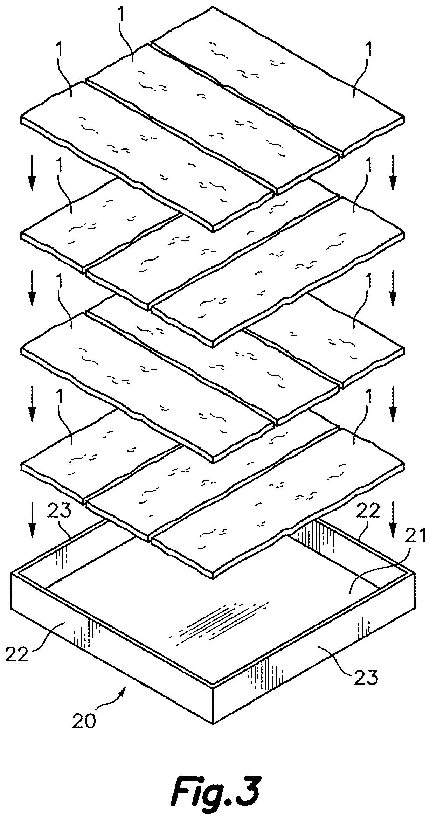

As shown in Figure 3, the mold 20 is then filled with cut and seasoned slender potato slices 1 by arranging alternate superimposed layers of elongated slender potato slices 1 until a potato millefeuille is formed, where each layer comprises adjacent elongated slender potato slices 1 oriented with the longitudinal directions thereof parallel to one another, and where the longitudinal directions of elongated slender potato slices 1 of one layer are crossed with respect to the longitudinal directions of elongated slender potato slices 1 of another contiguous layer.

The fact that the different layers of elongate slender potato slices 1 cross over one another gives the potato millefeuille consistency and minimizes the possible drawbacks that they may have if the longitudinal edges of the elongated slender potato slices 1 had irregularities.

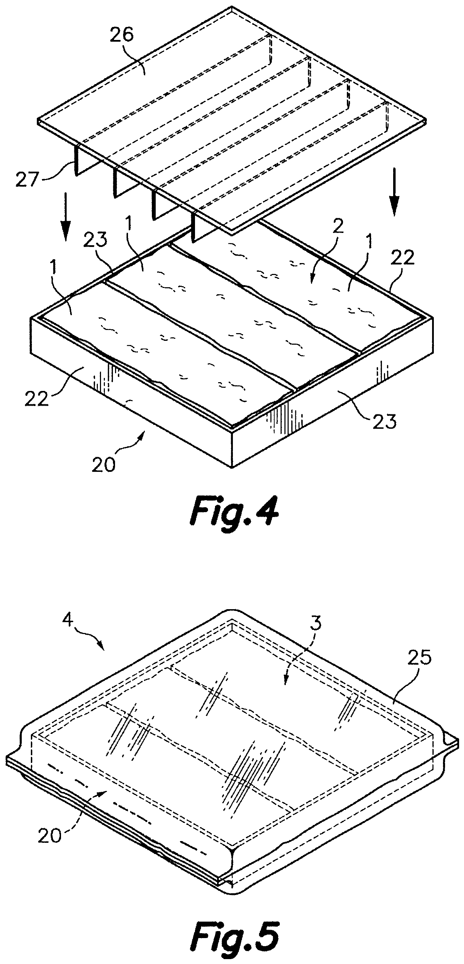

Figure 4 shows the potato millefeuille 2 housed inside the mold 20, where the potato millefeuille 2 is formed by alternate superimposed layers of cut and seasoned elongated slender potato slices 1 arranged in the manner described above in relation to Figure 3. Optionally, the upper surface of the potato millefeuille 2 housed in the mold 20 can be covered with a polyethylene film for culinary use.

Said Figure 4 also illustrates an optional tool, which can be included in the packaged product which consists of a plate 26, having a size slightly smaller than the width of the mold 22, said plate bearing a series of parallel, spaced apart bars 27, which are capable of cutting the molded millefeuille into strips. The plate 26 can be coupled to the mold before packaging (described in detail in Figure 5), or supplied as a separate part, such that users can perform the cutting operation by means of the bars 27 if they decide to cut the millefeuille into pieces.

Next, as shown in Figure 5, the method of the present invention comprises vacuum-packaging the mold 20 with said potato millefeuille 2 (and optionally with the plate 26) in a plastic film packaging 25 to form a packaged potato millefeuille 3, and subjecting the packaged potato millefeuille 3 to a thermal treatment which includes pasteurization to form the pre-prepared and packaged potato millefeuille 4 shown in Figure 5. The vacuum-packaging condition ensures that the slices will not deform upon being pressed by the sheet wrapper as a result of the vacuum. Finally, the pre-prepared and packaged potato millefeuille 4 is cooled to improve and extend its preservation, and so that the slices adhere to each other and are held fast together.

The thermal treatment comprises, for example, subjecting the packaged potato millefeuille 3 to a temperature of 100°C for a period of time comprised between 25 and 40 minutes, which is suitable for carrying out pasteurization. The thermal treatment is preferably performed using a steam oven. The treatment duration depends on said mold height or the millefeuille thickness. Alternatively, the treatment is performed in an autoclave. In the latter case, the temperature and the cooking time may vary depending on the cooking system used and on the machinery used.

After the thermal treatment, the pre-prepared and packaged potato millefeuille 4 can be forcefully cooled to a temperature comprised between 2°C and 6°C and preserved at this temperature until the moment of use as a refrigerated commercial product. Alternatively, the pre-prepared and packaged potato millefeuille 4 can be forcefully cooled to a temperature comprised between 2°C and 6°C, and left to stand at this temperature for a period of time comprised between 20 and 30 hours. Afterwards, the pre-prepared and packaged potato millefeuille 4 is then taken out from the plastic film packaging 25, removed from the mold 20, cut and frozen at a temperature of -15°C or lower, such that it can be preserved at this temperature until the moment of use. Alternatively, the product introduced in the plastic film packaging can be frozen, or it can be first frozen and then packaged. The pre-prepared and packaged potato millefeuille 4 can be packaged under atmospheric pressure before or after being frozen. As an additional step, the pre-prepared and packaged potato millefeuille 4 can be cut into portions to form potato millefeuille portions having desired dimensions after removing the potato millefeuille from the mold 20 and before freezing it.

Therefore, the pre-prepared and packaged potato millefeuille 4 prepared according to the method of the present invention can be placed on the market as a refrigerated product or a frozen product.

Optionally, the method of the present invention comprises arranging between the alternate superimposed layers of elongated slender potato slices 1, or at least between two of the alternate superimposed layers of elongated slender potato slices 1 of the potato millefeuille 2, slices, shreds or shavings of one or more food products selected from a group comprising cured ham, cooked ham, cold meats, fish, seafood, cheese, pâtés, boiled egg, vegetables, fresh herbs or spices, for example, with a carbohydrate, such as potato or rice starch mixed with water, or a gelling agent or a food-grade gum, to carry out the adhesion of the slices, shreds or shavings of the one or more food products to the alternate superimposed layers of elongated slender potato slices 1.

By means of the method described up until now we obtain the pre-prepared and packaged potato millefeuille shown in Figure 5, which comprises a potato millefeuille 3 arranged in a mold 20, vacuum-packaged in a plastic film packaging 25, pasteurized and cooled. The potato millefeuille 3 housed in the mold 20 comprises a plurality of alternate superimposed layers of elongated slender potato slices 1, seasoned with olive oil and fine salt, having a thickness comprised between 1 and 2 mm. Each layer comprises adjacent elongated slender potato slices 1 oriented with the longitudinal directions thereof parallel to one another, and the longitudinal directions of elongated slender potato slices 1 of one layer are crossed with respect to the longitudinal directions of elongated slender potato slices 1 of another contiguous layer.

It must furthermore be indicated that although the invention has been described in a manner in which it is applied to potatoes, it is also applicable to other tubers or products comprising starch, such as (topinambur, carrot, parsnip,....), turnip, beet, sweet potato or berries or other vegetable products such as pumpkin.

The same mold 20 mentioned above will be used in the second embodiment although the arrangement of the slices will optionally be without any crossing over. Likewise, the potato slices can be cut by means of another cutting device different from said Japanese mandoline.

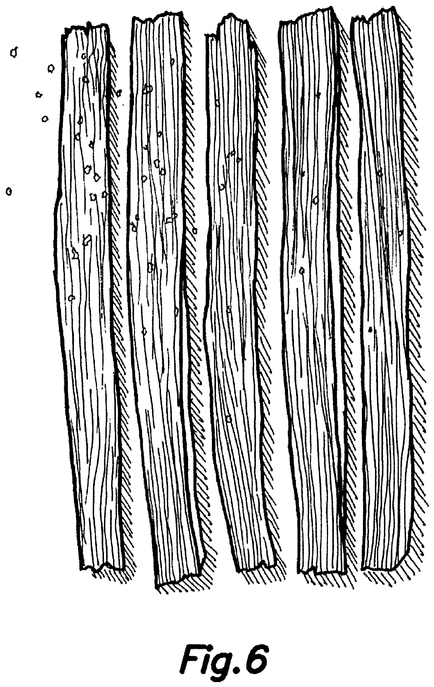

Figure 6 shows a plurality of scalloped potatoes according to an embodiment of the present invention, which have a slender linear configuration with a length of up to about 18 cm.

The scope of the present invention is defined in the attached claims.

## Claims

1. A preparation method for preparing a packaged potato millefeuille, comprising:
- cutting potatoes, previously peeled, into slender slices;
- stacking said slender potato slices inside a container until a specific thickness is reached;
- subjecting the stack of slender potato slices, arranged in said container, to a thermal treatment; and
- cooling said stack of potatoes,
wherein said container is a mold (20) having a square or rectangular base (21) with side walls (22, 23) having an inner height comprised between 2 and 3 cm,
**characterized in that**:
- said slender potato slices (1) have a uniform thickness comprised between 1 and 2 mm;
- said thermal treatment comprises steaming in an oven or an autoclave at a temperature between 80°C and 110°C for a time comprised between 25 min and 65 min, partially or completely cooking all the potato slices; and
- said cooling is maintained until a temperature comprised between 2°C and 8°C is reached;
and **in that** it further comprises applying a preserving step for preserving said potato millefeuille, said preserving step being performed before the thermal treatment step and comprises vacuum-packaging said mold containing said potato millefeuille in a plastic film packaging (25), the subsequent thermal treatment of the vacuum-packaged millefeuille causing the pasteurization thereof, and **in that** the packaged product is preserved at said temperature comprised between 2°C and 8°C until the moment of use, for a period of about 20 days.

2. The preparation method according to claim 1, further comprising, after the vacuum-packaging, the thermal treatment and the cooling of the millefeuille, leaving the cooled product to stand at said temperature comprised between 2°C and 8°C for a period of time comprised between 20 and 30 hours, taking the pre-prepared potato millefeuille out of said plastic film packaging (25), removing it from the mold (20), cutting it into portions, packaging it and freezing it at a temperature of -15°C or lower and preserving it in packaged form at this temperature until the moment of use.

3. The preparation method according to claim 1 or 2, further comprising filling the mold (20) with elongated slender potato slices (1) by arranging alternate superimposed layers of elongated slender potato slices (1) until forming a potato millefeuille (2), where each layer comprises adjacent elongated slender potato slices (1) oriented with the longitudinal directions thereof parallel to one another, and where the longitudinal directions of the elongated slender potato slices (1) of one layer are crossed with respect to the longitudinal directions of the elongated slender potato slices (1) of another contiguous layer.

4. The preparation method according to any one of claims 1 to 3, further comprising arranging, between at least two of the alternate superimposed layers of elongated slender potato slices (1), slices, shreds or shavings of one or more food products selected from a group comprising cured ham, cooked ham, cold meats, fish, seafood, cheese, pâté, boiled egg, and vegetables or spices.

5. The preparation method according to claim 4, further comprising using a carbohydrate or a gelling agent or a food-grade gum to carry out the adhesion of said slices, shreds or shavings of one or more food products to the alternate superimposed layers of elongated slender potato slices (1).

6. The preparation method according to claim 5, wherein said carbohydrate is rice starch or potato starch mixed with water, soy or a flavored liquid.

7. The preparation method according to claim 1, further comprising seasoning the elongated slender potato slices (1) at least with olive oil and fine salt, spices, aromatic herbs or soy.

8. A packaged potato millefeuille, comprising potatoes that are peeled, cut into slices, stacked, partially or completely cooked, obtained by a method according to claim 1.

9. The packaged potato millefeuille, comprising elongated slender portions or cubes of scalloped potato obtained by a method according to claim 1 or 3.

10. A packaged potato millefeuille according to claim 9, **characterized in that** said elongated slender scalloped potato obtained has a linear configuration with a length of up to about 18 cm.
